# EUROPEAN PATENT APPLICATION

(11) **EP 2 391 143 A2**
(43) Date of publication of application: **30.11.2011**
(21) Application number: 10733621.6
(22) Date of filing: 18.01.2010
(51) Int. Cl.: H04N 13/04, H04N 13/02, H04N 13/00

(54) **STEREOSCOPIC DISPLAY DEVICE**

(30) Priority: 21.01.2009 KR 20090005162
(71) Applicant: Zalman3D Co., Ltd., Gyeonggi-do 426-220 (KR)
(72) Inventor: LEE, Man Hoan, 156-722 Seoul (KR); HA, Kyoung Su, Gyeonggi-Do 437-767 (KR); SEO, Kwang Myung, Gyeonggi-do 445-719 (KR)
(74) Representative: Johnstone, Helen Margaret
(86) International application number: PCT/KR2010/000288
(87) International publication number: WO 2010/085068

(57) **Abstract**

A stereoscopic display apparatus that may reduce distortion of a displayed stereoscopic image, including: a display unit displaying an image that is linearly polarized in one direction; a stereoscopic filter disposed in front of the display unit to allow light emitted from the display unit to transmit through the stereoscopic filter and having a first area and a second area in which light having a wavelength λ _{G} is phase delayed by λ _{G}/4 and a phase delay axis of the first area and a phase delay axis of the second area cross each other; and a phase correction plate disposed in front of the display unit to allow light emitted from the display unit to transmit through the phase correction plate and phase-delaying light having the wavelength λ _{G} by λ _{G}/4, wherein an amount of phase delay of light having a wavelength λ other than the wavelength λ_{G} that passes through the stereoscopic filter and an amount of phase delay of light having a wavelength λ other than the wavelength λ_{G} that passes through the phase correction plate are opposite to each other by λ/4.

## Description

### CROSS-REFERENCE TO RELATED PATENT APPLICATION

This application claims the benefit of Korean Patent Application No. 10-2009-0005162, filed on January 21, 2009, in the Korean Intellectual Property Office, the disclosure of which is incorporated herein in its entirety by reference.

### BACKGROUND OF THE INVENTION

### 1. Field of the Invention

The present invention relates to a stereoscopic display apparatus, and more particularly, to a stereoscopic display apparatus that may reduce distortion of a displayed stereoscopic image.

### 2. Description of the Related Art

Generally, stereoscopic display apparatuses display an image for a left eye and an image for a right eye simultaneously, wherein a viewer's left eye recognizes only the image for a left eye and a viewer's right eye recognizes only the image for a right eye so that the viewer observes a stereoscopic image.

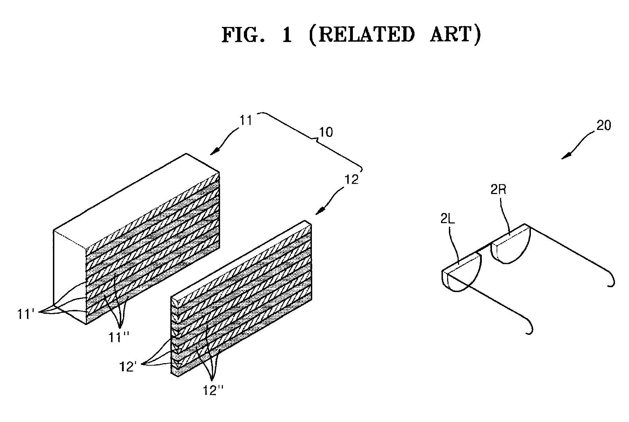

FIG. 1 is a schematic view of a stereoscopic display apparatus 10 according to the related art. The stereoscopic display apparatus 10 according to the related art may include stereoscopic glasses 20, as illustrated in FIG. 1 or may not include the stereoscopic glasses 20. The stereoscopic display apparatus 10 according to the related art includes a display unit 11 and a stereoscopic filter 12. The display unit 11 has an image area 11' for a left eye in which an image for a left eye is displayed, and an image area 11" for a right eye in which an image for a right eye is displayed. The display unit 11 emits light that is linearly polarized in one direction. The stereoscopic filter 12 has a first area 12' corresponding to the image area 11' for a left eye and a second area 12" corresponding to the image area 11" for a right eye. In the first area 12', light that passes through the first area 12' is polarized in a direction perpendicular to the one direction of the linearly polarized light emitted by the display unit 11, and in the second area 12", light passes through the second area 12" when the light is polarized in the one direction. In other words, light that passes through the first area 12' is phase delayed by λ/2. The stereoscopic glasses 20 include a linearly polarized plate 2L for a left eye and a linearly polarized plate 2R for a right eye. Only light that has passed through the first area 12' and is emitted from the image area 11' for a left eye passes through the linearly polarized plate 2L for a left eye of the stereoscopic glasses 20 and is recognized by a viewer's left eye, and only light that has passed through the second area 12" and is emitted from the image area 11" for a right eye passes through the linearly polarized plate 2R for a right eye of the stereoscopic glasses 20 and is recognized by a viewer's right eye so that a viewer can recognize a stereoscopic image.

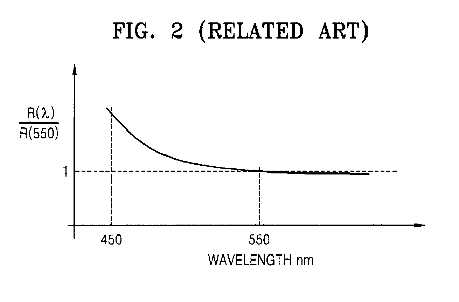

In the first area 12' of the stereoscopic filter 12, light that passes through the first area 12' is phase delayed by λ/2 and is polarized in a direction perpendicular to the one direction, and in the second area 12" of the stereoscopic filter 12, light passes through the second area 12" when the light is polarized in the one direction, so that polarization states of the light that passes through the first area 12' and the light that passes through the second area 12" are different from each other. However, as illustrated in FIG. 2, which is a graph showing a degree of phase delay according to a wavelength of light, ideally, the degree of phase delay needs to be constant in all wavelength bands regardless of the wavelength of light; i.e., in FIG. 2, the degree of phase delay has to be a horizontal straight line that extends in right and left directions. However, the degree of phase delay differs according to the wavelength of light. In detail, when a degree at which light having a wavelength of 550 nm is phase delayed is referred to as R(550) and a degree at which light having a wavelength λ is phase delayed is referred to as R(λ), light having a shorter wavelength than 550 nm is more phase delayed than light having a wavelength of 550 nm, and light having a longer wavelength than 550 nm is less phase delayed than light having a wavelength of 550 nm.

Thus, the light that passes through the first area 12' of the stereoscopic filter 12 has a different polarization state from an intended polarization state of light having a predetermined wavelength, for example, other wavelengths than 550 nm. As such, the light emitted from the image area 11' for a left eye passes through the linearly polarized plate 2R for a right eye of the stereoscopic glasses 20 and can be recognized by a viewer's right eye. Thus, the quality of a stereoscopic image recognized by the viewer is lowered.

### SUMMARY OF THE INVENTION

The present invention provides a stereoscopic display apparatus that may reduce distortion of a displayed stereoscopic image.

According to an aspect of the present invention, there is provided a stereoscopic display apparatus including: a display unit displaying an image that is linearly polarized in one direction; a stereoscopic filter disposed in front of the display unit to allow light emitted from the display unit to transmit through the stereoscopic filter and having a first area and a second area in which light having a wavelength λ _{G} is phase delayed by λ _{G}/4 and a phase delay axis of the first area and a phase delay axis of the second area cross each other; and a phase correction plate disposed in front of the display unit to allow light emitted from the display unit to transmit through the phase correction plate and phase-delaying light having the wavelength λ _{G} by λ _{G}/4, wherein an amount of phase delay of light having a wavelength λ other than the wavelength λ_{G} that passes through the stereoscopic filter and an amount of phase delay of light having a wavelength λ other than the wavelength λ_{G} that passes through the phase correction plate are opposite to each other by λ/4.

The phase delay axis of the first area of the stereoscopic filter and the one direction of the linearly polarized light emitted by the display unit may form an angle of 45° .

The phase delay axis of the phase correction plate may be parallel to the phase delay axis of the first area of the stereoscopic filter.

Light having the wavelength λ _{G} that is emitted from the display unit and passes through the first area of the stereoscopic filter and the phase correction plate may be linearly polarized in a direction perpendicular to the one direction.

The phase delay axis of the first area and the phase delay axis of the second area of the stereoscopic filter may be perpendicular to each other.

Light having the wavelength λ _{G} that is emitted from the display unit and passes through the second area of the stereoscopic filter and the phase correction plate may be linearly polarized in a direction parallel to the one direction.

When an amount of phase delay of light having a wavelength λ other than the wavelength λ_{G} that passes through the stereoscopic filter is larger than λ/4, an amount of phase delay of the light having a wavelength λ other than the wavelength λ_{G} that passes through the phase correction plate may be smaller than λ/4, and when an amount of phase delay of light having a wavelength λ other than the wavelength λ_{G} that passes through the stereoscopic filter is smaller than λ/4, an amount of phase delay of the light having a wavelength λ other than the wavelength λ_{G} that passes through the phase correction plate may be larger than λ/4.

According to another aspect of the present invention, there is provided a stereoscopic display apparatus including: a display unit displaying an image that is linearly polarized in one direction; a stereoscopic filter disposed in front of the display unit to allow light emitted from the display unit to transmit through the stereoscopic filter and having a first area and a second area in which light having a wavelength λ _{G} is phase delayed by a second amount of phase delay and a phase delay axis of the first area and a phase delay axis of the second area cross each other; and a phase correction plate disposed in front of the display unit to allow light emitted from the display unit to transmit through the phase correction plate and phase-delaying light having the wavelength λ _{G} by a first amount of phase delay, wherein an amount of phase delay of light having a wavelength λ other than the wavelength λ_{G} that passes through the phase correction plate is larger than an amount of phase delay of light having a wavelength λ other than the wavelength λ_{G} that passes through the stereoscopic filter.

The phase delay axis of the first area of the stereoscopic filter and the one direction of the linearly polarized light emitted by the display unit may form an angle of 45° .

The phase delay axis of the phase correction plate may be parallel to the phase delay axis of the first area of the stereoscopic filter.

Light having the wavelength λ_{G} that is emitted from the display unit and passes through the first area of the stereoscopic filter and the phase correction plate may be linearly polarized in a direction perpendicular to the one direction.

The phase delay axis of the first area and the phase delay axis of the second area of the stereoscopic filter may be perpendicular to each other.

Light having the wavelength λ _{G} that is emitted from the display unit and passes through the second area of the stereoscopic filter and the phase correction plate may be linearly polarized in a direction parallel to the one direction.

The stereoscopic display apparatus may further include stereoscopic glasses that a viewer can wear, wherein one of a left-eye lens and a right-eye lens of the stereoscopic glasses allows light that is linearly polarized in the one direction to pass through the one lens, and the other one thereof allows light that is linearly polarized in a direction perpendicular to the one direction to pass through the other lens.

### BRIEF DESCRIPTION OF THE DRAWINGS

The above and other features and advantages of the present invention will become more apparent by describing in detail exemplary embodiments thereof with reference to the attached drawings in which:
FIG. 1 is a schematic view of a stereoscopic display apparatus according to the related art;
FIG. 2 is a graph showing a degree of phase delay according to a wavelength of light;
FIG. 3 is a schematic view of a stereoscopic display apparatus according to an embodiment of the present invention;
FIG. 4 is a schematic view of a polarization state of light to explain an operation of the stereoscopic display apparatus illustrated in FIG. 3;
FIG. 5 is a graph showing a degree of phase delay according to a wavelength of light, to explain an operation of the stereoscopic display apparatus illustrated in FIG. 3;
FIG. 6 is a graph showing a degree of phase delay according to a wavelength of light to explain an operation of a stereoscopic display apparatus according to another embodiment of the present invention; and
FIG. 7 is a schematic view of a stereoscopic display apparatus according to another embodiment of the present invention.

### DETAILED DESCRIPTION OF THE INVENTION

The invention now will be described more fully hereinafter with reference to the accompanying drawings, in which exemplary embodiments of the invention are shown.

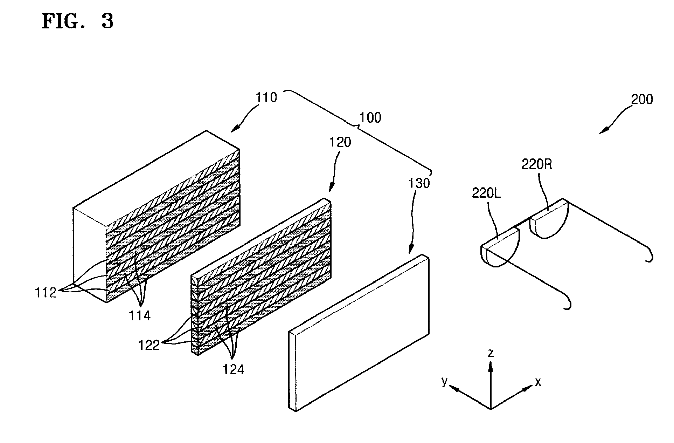

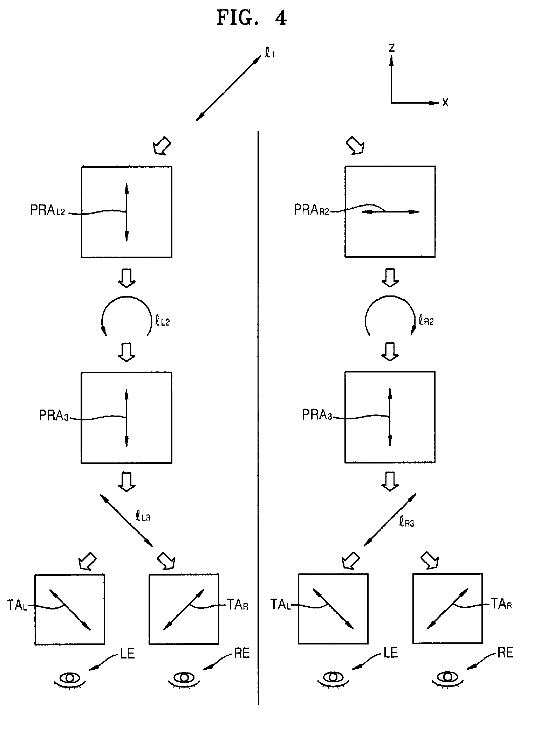

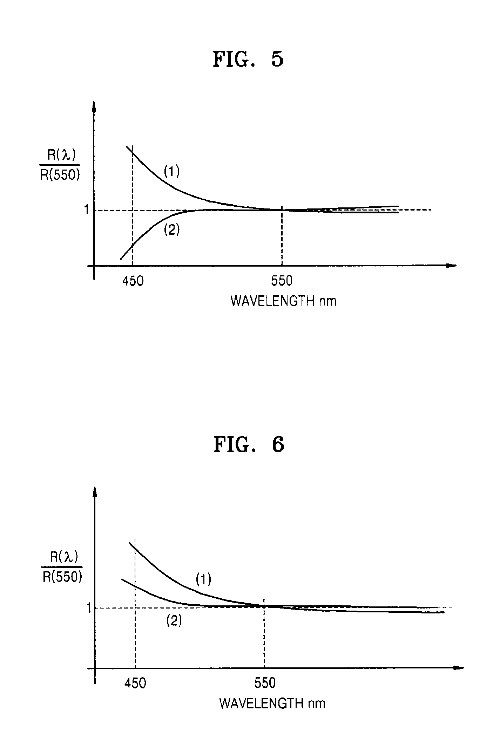

FIG. 3 is a schematic view of a stereoscopic display apparatus 100 according to an embodiment of the present invention, and FIG. 4 is a schematic view of a polarization state of light to explain an operation of the stereoscopic display apparatus 100 illustrated in FIG. 3, and FIG. 5 is a graph showing a degree of phase delay according to a wavelength of light, to explain an operation of the stereoscopic display apparatus 100 illustrated in FIG. 3.

As illustrated in FIG. 3, the stereoscopic display apparatus 100 according to the current embodiment of the present invention includes a display unit 110, a stereoscopic filter 120, and a phase correction plate 130. In FIG. 3, for convenience of explanation, the display unit 110, the stereoscopic filter 120 and the phase correction plate 130 of the stereoscopic display apparatus 100 are disposed apart from one another. However, the present invention is not limited thereto, and they may be disposed adjacent to one another or in contact with one another. The stereoscopic display apparatus 100 may be a stereoscopic display apparatus including elements indicated by reference numeral 100. Obviously, stereoscopic glasses 200 that a viewer can wear are also illustrated in FIG. 3. Thus, elements including the display unit 110, the stereoscopic filter 120, the phase correction plate 130 and the stereoscopic glasses 200 illustrated in FIG. 3 may also be referred to as a stereoscopic display apparatus. In the description of the current embodiment, for convenience of explanation, the elements including the display unit 110, the stereoscopic filter 120 and the phase correction plate 130 are indicated by reference numeral 100 and are referred to as a stereoscopic display apparatus.

The display unit 110 may display an image that is linearly polarized in one direction. In order to display the image that is linearly polarized in one direction, the display unit 110 may include a linearly polarized plate (not shown). Obviously, when the display unit 110 includes a backlight unit (not shown), the backlight unit emits light that is linearly polarized in one direction in such a way that the display unit 110 displays an image that is linearly polarized in one direction naturally. In this regard, the image may be a still image or a moving image such as a movie. The display unit 110 has an image area 112 for a left eye in which an image for a left eye to be recognized by a viewer's left eye is displayed, and an image area 114 for a right eye in which an image for a right eye to be recognized by a viewer's right eye is displayed. In FIG. 3, for convenience of explanation, the image area 112 for a left eye and the image area 114 for a right eye have stripe patterns. However, the present invention is not limited thereto, and they may have various patterns other than the stripe patterns.

The stereoscopic filter 120 is disposed in front of the display unit 110 to correspond to the entire surface of the display unit 110 and allows light emitted from the display unit 110 to pass through the stereoscopic filter 120. In this regard, the entire surface of the display unit 110 refers to an area in which light is emitted from the display unit 110, or an area including the area in which light is emitted from the display unit 110. The stereoscopic filter 120 has a first area 122 and a second area 124. The first area 122 corresponds to the image area 112 for a left eye of the display unit 110, and the second area 124 corresponds to the image area 114 for a right eye of the display unit 110. Obviously, differently, the first area 122 may correspond to the image area 114 for a right eye of the display unit 110, and the second area 124 may correspond to the image area 112 for a left eye of the display unit 110. Thus, in the current embodiment and other embodiments and modified examples described below, for convenience of explanation, the first area 122 corresponds to the image area 112 for a left eye of the display unit 110, and the second area 124 corresponds to the image area 114 for a right eye of the display unit 110.

In the first area 122 and the second area 124 of the stereoscopic filter 120, phase delay axes cross each other. In detail, in the first area 122 and the second area 124 of the stereoscopic filter 120, light having a predetermined wavelength λ_{G} that passes through the first area 122 may be phase delayed by λ_{G}/4, and light having a predetermined wavelength λ_{G} that passes through the second area 124 may be phase delayed by λ_{G}/4, respectively, and phase delay axes cross each other. In this regard, light having the wavelength λ_{G} may be green light having the wavelength λ_{G} (where λ_{G} = 550 nm), for example.

The phase correction plate 130 is disposed in front of the display unit 110 so that light emitted from the display unit 110 passes through the phase correction plate 130. In FIG. 3, light that is emitted from the display unit 110 and passes through the stereoscopic filter 120 passes through the phase correction plate 130. The phase correction plate 130 may allow light having the wavelength λ_{G} to be phase delayed by λ_{G}/4. Furthermore, the phase correction plate 130 may correct a phase of light that passes through the stereoscopic filter 120.

An amount of phase delay of light having a wavelength λ other than the wavelength λ_{G} that passes through the stereoscopic filter 120 and an amount of phase delay of light having a wavelength λ other than the wavelength λ_{G} that passes through the phase correction plate 130 are opposite to each other by λ/4, as will be described below.

The stereoscopic glasses 200 have a left-eye lens and a right-eye lens. The left-eye lens may be a linearly polarized plate 220L for a left eye, and the right-eye lens may be a linearly polarized plate 220R for a right eye. One of the left-eye lens and the right-eye lens of the stereoscopic glasses 200 allows light that is linearly polarized in the one direction to pass therethrough, and the other one thereof allows light that is linearly polarized in a direction perpendicular to the one direction to pass therethrough. As described above, for convenience of explanation, the first area 122 corresponds to the image area 112 for a left eye of the display unit 110, and the second area 124 corresponds to the image area 114 for a right eye of the display unit 110. Thus, the linearly polarized plate 220L for a left eye of the stereoscopic glasses 200 allows light that passes through the first area 122 to transmit through the linearly polarized plate 220L for a left eye and to be incident on a viewer's left eye, and the linearly polarized plate 220R for a right eye of the stereoscopic glasses 200 allows light that passes through the second area 124 to transmit through the linearly polarized plate 220R for a right eye and to be incident on a viewer's right eye.

An operation of the stereoscopic display apparatus 100 illustrated in FIG. 3 will be described with reference to FIG. 4 as follows. The display unit 110 displays an image by using light ℓ ₁ that is linearly polarized in one direction. In FIG. 4, the light ℓ ₁ is linearly polarized in a direction in which it forms an angle of 45° with the x-axis. The light ℓ ₁ is emitted from the display unit 110 and then passes through the stereoscopic filter 120.

Light of an image for a left eye passes through the first area 122 of the stereoscopic filter 120. As illustrated in FIG. 4, a phase delay axis PRA_{L2} of the first area 122 of the stereoscopic filter 120 and the one direction of the linearly polarized light ℓ ₁ may form an angle of 45° . As described above, in the first area 122 of the stereoscopic filter 120, light having a predetermined wavelength λ _{G} may be phase delayed by λ _{G}/4. Thus, as illustrated in FIG. 4, light that passes through the first area 122 of the stereoscopic filter 120 is light ℓ _{L2} that is right-circularly polarized (when viewed from the display unit 110 in a direction towards the viewer).

Light of an image for a right eye passes through the second area 124 of the stereoscopic filter 120. As illustrated in FIG. 4, a phase delay axis PRA_{R2} of the second area 124 of the stereoscopic filter 120 crosses the phase delay axis PRA_{L2} of the first area 122 of the stereoscopic filter 120. In detail, the phase delay axis PRA_{R2} of the second area 124 of the stereoscopic filter 120 may be substantially perpendicular to the phase delay axis PRA_{L2} of the first area 122 of the stereoscopic filter 120. As described above, in the second area 124 of the stereoscopic filter 120, light having a predetermined wavelength λ _{G} may be phase delayed by λ _{G}/4. Thus, as illustrated in FIG. 4, light that passes through the second area 124 of the stereoscopic filter 120 is light ℓ _{R2} that is left-circularly polarized (when viewed from the display unit 110 in a direction towards the viewer).

The light ℓ _{L2} of the image for a left eye that has passed through the first area 122 of the stereoscopic filter 120 passes through the phase correction plate 130. A phase delay axis PRA₃ of the phase correction plate 130 may be substantially parallel to the phase delay axis PRA_{L2} of the first area 122 of the stereoscopic filter 120. Thus, the light ℓ _{L2} of the image for a left eye that has passed through the first area 122 of the stereoscopic filter 120 and is right-circularly polarized passes through the phase correction plate 130 and then is light ℓ _{L3} that is linearly polarized. In this regard, a direction of linear polarization of the light ℓ _{L3} is perpendicular to a direction of linear polarization of the light ℓ₁ emitted from the display unit 110. In other words, the light ℓ _{L3} that is emitted from the display unit 110 and passes through the first area 122 of the stereoscopic filter 120 and the phase correction plate 130 is linearly polarized in a direction perpendicular to the one direction.

The linearly polarized plate 220L for a left eye of the stereoscopic glasses 200 has a transmission axis TA_{L} on which the light ℓ _{L3} that is emitted from the display unit 110 and passes through the first area 122 of the stereoscopic filter 120 and the phase correction plate 130 transmits through the linearly polarized plate 220L for a left eye of the stereoscopic glasses 200. The linearly polarized plate 220R for a right eye of the stereoscopic glasses 200 has a transmission axis TA_{R} that is perpendicular to the transmission axis TA_{L} of the linearly polarized plate 220L for a left eye of the stereoscopic glasses 200 in such a way that the light ℓ _{L3} that is emitted from the display unit 110 and passes through the first area 122 of the stereoscopic filter 120 and the phase correction plate 130 does not transmit through the linearly polarized plate 220R for a right eye of the stereoscopic glasses 200.

The light ℓ _{R2} of the image for a left eye that has passed through the second area 124 of the stereoscopic filter 120 passes through the phase correction plate 130. Since the phase delay axis PRA₃ of the phase correction plate 130 is substantially parallel to the phase delay axis PRA_{L2} of the first area 122 of the stereoscopic filter 120 and is substantially perpendicular to the phase delay axis PRA_{R2} of the second area 124 of the stereoscopic filter 120, the light ℓ _{R2} of the image for a right eye that has passed through the second area 124 of the stereoscopic filter 120 and is left-circularly polarized passes through the phase correction plate 130 and then is light ℓ _{R3} that is linearly polarized. In this regard, a direction of linear polarization of the light ℓ _{R3} is parallel to a direction of linear polarization of the light ℓ ₁ emitted from the display unit 110. In other words, the light ℓ _{R3} that is emitted from the display unit 110 and passes through the second area 124 of the stereoscopic filter 120 and the phase correction plate 130 is linearly polarized in a direction parallel to the one direction.

The linearly polarized plate 220R for a right eye of the stereoscopic glasses 200 has the transmission axis TA_{R} on which the light ℓ _{L3} that is emitted from the display unit 110 and passes through the second area 124 of the stereoscopic filter 120 and the phase correction plate 130 transmits through the linearly polarized plate 220R for a right eye of the stereoscopic glasses 200. The linearly polarized plate 220L for a left eye of the stereoscopic glasses 200 has the transmission axis TA_{L} that is perpendicular to the transmission axis TA_{R} of the linearly polarized plate 220R for a right eye of the stereoscopic glasses 200 in such a way that the light ℓ_{R3} that is emitted from the display unit 110 and passes through the second area 124 of the stereoscopic filter 120 and the phase correction plate 130 does not transmit through the linearly polarized plate 220L for a left eye of the stereoscopic glasses 200.

In this way, the light emitted from the image area 112 for a left eye of the display unit 110 is recognized by a viewer's left eye LE, and the light emitted from the image area 114 for a right eye of the display unit 110 is recognized by a viewer's right eye RE so that the viewer recognizes a stereoscopic image. In the stereoscopic display apparatus 100 illustrated in FIG. 3, differently from a stereoscopic display apparatus according to the related art, a degree at which an image for a left eye is recognized by the viewer's right eye RE, is significantly reduced, and a degree at which an image for a right eye is recognized by the viewer's left eye LE, is significantly reduced so that the viewer recognizes a high-quality stereoscopic image. This will be described later in detail.

As described above, FIG. 2 is a graph showing a degree of phase delay according to a wavelength of light. In detail, FIG. 2 shows a degree of phase delay according to a wavelength of light when a degree at which light having a wavelength of 550 nm is phase delayed is referred to as R(550) and a degree at which light having a wavelength λ is phase delayed is referred to as R(λ). Referring to FIG. 2, light having a shorter wavelength than 550 nm is more phase delayed than light having the wavelength of 550 nm, and light having a longer wavelength than 550 nm is less phase delayed than light having the wavelength of 550 nm.

FIG. 5 is a graph showing a degree of phase delay of light that passes through the stereoscopic filter 120 and a degree of phase delay of light that passes through the phase correction plate 130 of the stereoscopic display apparatus 100 illustrated in FIG. 3. Reference numeral (1) of FIG. 5 represents a degree at which light passing through the stereoscopic filter 120 is phase delayed according to wavelength, and reference numeral (2) of FIG. 5 represents a degree at which light passing through the phase correction plate 130 is phase delayed according to wavelength. As illustrated in FIG. 5, a degree of phase delay of light having a wavelength λ other than a wavelength λ_{G}, for example, 550 nm, that passes through the stereoscopic filter 120, and an amount of phase delay of the light having a wavelength λ other than the wavelength λ_{G}, for example, 550 nm, that passes through the phase correction plate 130 are opposite to each other by λ/4. In detail, when the amount of phase delay of the light having a wavelength λ other than the wavelength λ_{G} that passes through the stereoscopic filter 120 is larger than λ/4, the amount of phase delay of the light having a wavelength λ other than the wavelength λ_{G} that passes through the phase correction plate 130 is smaller than λ/4, and when the amount of phase delay of the light having a wavelength λ other than the wavelength λ_{G} that passes through the stereoscopic filter 120 is smaller than λ/4, the amount of phase delay of the light having a wavelength λ other than the wavelength λ_{G} that passes through the phase correction plate 130 is larger than λ/4.

Since light having a predetermined wavelength λ_{G} that passes through the stereoscopic filter 120 and light having a predetermined wavelength λ_{G} that passes through the phase correction plate 130 may be phase delayed by λ_{G}/4, a difference between a degree of phase delay of light that passes through the stereoscopic filter 120 and a degree of phase delay of light that passes through the phase correction plate 130 according to a wavelength of light is compensated for. Thus, the ratio at which an image for a left eye is recognized by the viewer's right eye RE or an image for a right eye is recognized by the viewer's left eye LE may be significantly reduced.

Obviously, reference numeral (1) in FIG. 5 represents a degree of phase delay of light that passes through the stereoscopic filter 120 according to a wavelength of light, and reference numeral (2) in FIG. 5 represents a degree of phase delay of light that passes through the phase correction plate 130 according to a wavelength of light, however, and vise versa. In this way, the degree of phase delay of the light having a wavelength λ other than a wavelength λ_{G}, for example, 550 nm, that passes through the stereoscopic filter 120, and the degree of phase delay of the light having a wavelength λ other than the wavelength λ_{G}, for example, 550 nm, that passes through the phase correction plate 130 are opposite to each other by λ/4. Thus, dispersion of the amount of phase delay of light according to a wavelength of light may be controlled by using a dispersion control additive to be added when the stereoscopic display apparatus 100 of FIG. 3 is manufactured. Control of dispersion of the amount of phase delay of light according to a wavelength of light is disclosed in Korean Patent Laid-open Publication No. 2001-033765, for example, which will be included in the present application as reference.

FIG. 6 is a graph showing a degree of phase delay according to a wavelength of light to explain an operation of a stereoscopic display apparatus according to another embodiment of the present invention. The structure of the stereoscopic display apparatus according to the current embodiment of the present invention is the same as that of the stereoscopic display apparatus 100 illustrated in FIG. 3. The only difference is that a degree of phase delay of light that passes through the stereoscopic filter 120 and a degree of phase delay of light that passes through the phase correction plate 130 are different from each other.

The stereoscopic filter 120 according to the current embodiment also has a first area 122 and a second area 124. A phase delay axis of the first area 122 and a phase delay axis of the second area 124 cross each other and may be substantially perpendicular to each other. The stereoscopic filter 120 may phase delay light having a wavelength λ_{G}, for example, 550 nm, by a second amount of phase delay. The phase correction plate 130 may phase delay the light having the wavelength λ_{G} by a first amount of phase delay. In this regard, an amount of phase delay of light having a wavelength λ other than the wavelength λ_{G} that passes through the stereoscopic filter 120 is larger than an amount of phase delay of light having the wavelength λ other than the wavelength λ_{G} that passes through the phase correction plate 130.

As described above, the display unit 110 of the stereoscopic display apparatus has the image area 112 for a left eye in which an image for a left eye to be recognized by the viewer's left eye is displayed, and the image area 114 for a right eye in which an image for a right eye to be recognized by the viewer's right eye is displayed. The stereoscopic filter 120 has the first area 122 and the second area 124 to correspond to the image area 112 for a left eye and the image area 114 for a right eye, respectively. In detail, the stereoscopic filter 120 needs to be patterned as the first area 122 and the second area 124. To this end, the stereoscopic filter 120 may be constituted using liquid crystal. In other words, an orientation layer formed of a polymethaacryl- or polyimide-based organic material that corresponds to the first area 122 and an orientation layer formed of a polymethaacryl- or polyimide-based organic material that corresponds to the second area 124 are oriented in different directions by exposure, and liquid crystal is disposed on top surfaces of the orientation layers so that the first area 122 and the second area 124 are formed in the stereoscopic filter 120. The phase correction plate 130 that phase delays light corresponds to the entire surface of the display unit 110 and thus does not need to be patterned and may be formed of an oriented film. Contrary to this, when the phase correction plate 130 is formed of an oriented film, it is not easy to form the stereoscopic filter 120 that needs to be patterned.

In this way, the stereoscopic filter 120 and the phase correction plate 130 may be manufactured using different methods depending on the necessity of patterning. A degree of phase delay of light that passes through the stereoscopic filter 120 and a degree of phase delay of light that passes through the phase correction plate 130 differ according to a wavelength of light, as illustrated in FIG. 6. In detail, reference numeral (1) represents a degree of phase delay of light that passes through the stereoscopic filter 120 according to a wavelength of light, and reference numeral (2) represents a degree of phase delay of light that passes through the phase correction plate 130 according to a wavelength of light. Thus, a degree of dispersion of the degree of phase delay of light that passes through the stereoscopic filter 120 according to a wavelength of light is larger than a degree of dispersion of the degree of phase delay of light that passes through the phase correction plate 130 according to a wavelength of light.

As described above with reference to FIGS. 3 and 4, the phase delay axis PRA_{L2} of the first area 122 of the stereoscopic filter 120 and the one direction form approximately an angle of 45° , and the phase delay axis PRA₃ of the phase correction plate 130 is parallel to the phase delay axis PRA_{L2} of the first area 122 of the stereoscopic filter 120 in such a way that light having a wavelength λ_{G}, for example, 550 nm, that is emitted from the display unit 110 and passes through the first area 122 of the stereoscopic filter 120 and the phase correction plate 130 is linearly polarized in the direction perpendicular to the one direction. In other words, the light having the wavelength λ_{G}, for example, 550 nm, that is emitted from the display unit 110 and passes through the first area 122 of the stereoscopic filter 120 and the phase correction plate 130 is phase delayed by half wavelength. A degree of phase delay of light having a wavelength other than the wavelength λ_{G} is different from a degree of phase delay of light having the wavelength λ_{G}, as illustrated in FIG. 6. Thus, the light having a wavelength other than the wavelength λ_{G} is not exactly perpendicular to the one direction when being emitted from the display unit 110 and passing through the first area 122 of the stereoscopic filter 120 and the phase correction plate 130. However, in order for the light having a wavelength other than the wavelength λ_{G} to be substantially perpendicular to the one direction, an amount of phase delay of light having a wavelength λ other than the wavelength λ_{G} that passes through the phase correction plate 130 has to be larger than an amount of phase delay of light having the wavelength λ other than the wavelength λ_{G} that passes through the stereoscopic filter 120 in such a way that the light having a wavelength other than the wavelength λ_{G} is phase delayed, if possible, similarly to light having the wavelength λ_{G} when the light having a wavelength other than the wavelength λ_{G} passes through the first area 122 of the stereoscopic filter 120 and the phase correction plate 130.

As illustrated in FIG. 6, a degree of dispersion of the amount of phase delay of the light having a wavelength λ other than the wavelength λ_{G} that passes through the phase correction plate 130 is less than a degree of dispersion of the amount of phase delay of the light having a wavelength λ other than the wavelength λ_{G} that passes through the stereoscopic filter 120. Thus, when an amount of phase delay of light that passes through the phase correction plate 130 is larger than that of light that passes through the stereoscopic filter 120, a degree of dispersion of an amount of phase delay of light according to a wavelength of light is less than a degree of dispersion that occurs when an amount of phase delay of light that passes through the stereoscopic filter 120 is larger than that of light that passes through the phase correction plate 130. Thus, a degree of dispersion of the amount of phase delay of light that passes through the stereoscopic filter 120 and a degree of dispersion of the amount of phase delay of light that passes through the phase correction plate 130 according to a wavelength of light may further approximate each other ideally.

For example, light having a wavelength λ _{G}, for example, 550 nm, that is emitted from the display unit 110 and passes through the first area 122 of the stereoscopic filter 120 and light having a wavelength λ _{G}, for example, 550 nm, that is emitted from the display unit 110 and passes through the phase correction plate 130 are phase delayed by half wavelength. Thus, light that passes through the first area 122 of the stereoscopic filter 120 is phase delayed by a smaller amount than a quarter wavelength, and light that passes through the phase correction plate 130 is phase delayed by a larger amount than a quarter wavelength in such a way that both the light having the wavelength λ _{G}, for example, 550 nm, that is emitted from the display unit 110 and passes through the first area 122 of the stereoscopic filter 120 and the light having the wavelength λ _{G}, for example, 550 nm, that is emitted from the display unit 110 and passes through the phase correction plate 130 are phase delayed by half wavelength. Thus, a degree of dispersion of the amount of phase delay of light that passes through the stereoscopic filter 120 and a degree of dispersion of the amount of phase delay of light that passes through the phase correction plate 130 according to a wavelength of light may further approximate each other ideally.

As described in the stereoscopic display apparatus with reference to FIGS. 3 and 4, in the stereoscopic display apparatus according to the current embodiment, the phase delay axis PRA_{L2} of the first area 122 and the phase delay axis PRA_{R2} of the second area 124 of the stereoscopic filter 120 may be substantially perpendicular to each other. In this regard, the light having the wavelength λ _{G} that is emitted from the display unit 110 and passes through the second area 124 of the stereoscopic filter 120 and the light having the wavelength λ _{G} that is emitted from the display unit 110 and passes through the phase correction plate 130 are linearly polarized in a direction substantially parallel to the one direction.

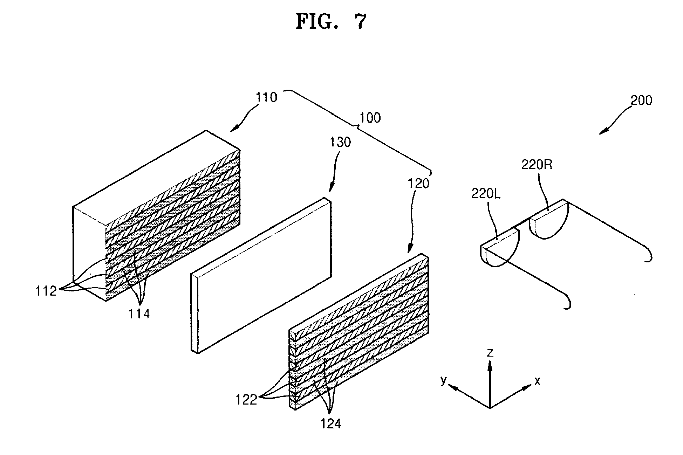

FIG. 7 is a schematic view of a stereoscopic display apparatus according to another embodiment of the present invention. The difference between the stereoscopic display apparatus illustrated in FIG. 7 and the stereoscopic display apparatuses illustrated in FIGS. 3 and 6 is that light emitted from the display unit 110 passes through the phase correction plate 130 and then passes through the stereoscopic filter 120. In this way, all the descriptions in the above embodiments may be applied to a case where the position of the stereoscopic filter 120 and the position of the phase correction plate 130 are switched each other.

As described above, in a stereoscopic display apparatus according to the present invention, distortion of a displayed stereoscopic image can be reduced.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A stereoscopic display apparatus comprising:
a display unit displaying an image that is linearly polarized in one direction;
a stereoscopic filter disposed in front of the display unit to allow light emitted from the display unit to transmit through the stereoscopic filter and having a first area and a second area in which light having a wavelength λ _{G} is phase delayed by λ _{G}/4 and a phase delay axis of the first area and a phase delay axis of the second area cross each other; and
a phase correction plate disposed in front of the display unit to allow light emitted from the display unit to transmit through the phase correction plate and phase-delaying light having the wavelength λ _{G} by λ _{G}/4,
wherein an amount of phase delay of light having a wavelength λ other than the wavelength λ_{G} that passes through the stereoscopic filter and an amount of phase delay of light having a wavelength λ other than the wavelength λ_{G} that passes through the phase correction plate are opposite to each other by λ/4.

2. The stereoscopic display apparatus of claim 1, wherein the phase delay axis of the first area of the stereoscopic filter and the one direction of the linearly polarized light emitted by the display unit form an angle of 45° .

3. The stereoscopic display apparatus of claim 1, wherein the phase delay axis of the phase correction plate is parallel to the phase delay axis of the first area of the stereoscopic filter.

4. The stereoscopic display apparatus of claim 3, wherein light having the wavelength λ _{G} that is emitted from the display unit and passes through the first area of the stereoscopic filter and the phase correction plate is linearly polarized in a direction perpendicular to the one direction.

5. The stereoscopic display apparatus of claim 3, wherein the phase delay axis of the first area and the phase delay axis of the second area of the stereoscopic filter are perpendicular to each other.

6. The stereoscopic display apparatus of claim 5, wherein light having the wavelength λ _{G} that is emitted from the display unit and passes through the second area of the stereoscopic filter and the phase correction plate is linearly polarized in a direction parallel to the one direction.

7. The stereoscopic display apparatus of claim 1, wherein, when an amount of phase delay of light having a wavelength λ other than the wavelength λ_{G} that passes through the stereoscopic filter is larger than λ/4, an amount of phase delay of the light having a wavelength λ other than the wavelength λ_{G} that passes through the phase correction plate is smaller than λ/4, and when an amount of phase delay of light having a wavelength λ other than the wavelength λ_{G} that passes through the stereoscopic filter is smaller than λ/4, an amount of phase delay of the light having a wavelength λ other than the wavelength λ_{G} that passes through the phase correction plate is larger than λ/4.

8. A stereoscopic display apparatus comprising:
a display unit displaying an image that is linearly polarized in one direction;
a stereoscopic filter disposed in front of the display unit to allow light emitted from the display unit to transmit through the stereoscopic filter and having a first area and a second area in which light having a wavelength λ _{G} is phase delayed by a second amount of phase delay and a phase delay axis of the first area and a phase delay axis of the second area cross each other; and
a phase correction plate disposed in front of the display unit to allow light emitted from the display unit to transmit through the phase correction plate and phase-delaying light having the wavelength λ_{G} by a first amount of phase delay,
wherein an amount of phase delay of light having a wavelength λ other than the wavelength λ_{G} that passes through the phase correction plate is larger than an amount of phase delay of light having a wavelength λ other than the wavelength λ_{G} that passes through the stereoscopic filter.

9. The stereoscopic display apparatus of claim 8, wherein the phase delay axis of the first area of the stereoscopic filter and the one direction of the linearly polarized light emitted by the display unit form an angle of 45° .

10. The stereoscopic display apparatus of claim 9, wherein the phase delay axis of the phase correction plate is parallel to the phase delay axis of the first area of the stereoscopic filter.

11. The stereoscopic display apparatus of claim 10, wherein light having the wavelength λ_{G} that is emitted from the display unit and passes through the first area of the stereoscopic filter and the phase correction plate is linearly polarized in a direction perpendicular to the one direction.

12. The stereoscopic display apparatus of claim 10, wherein the phase delay axis of the first area and the phase delay axis of the second area of the stereoscopic filter are perpendicular to each other.

13. The stereoscopic display apparatus of claim 12, wherein light having the wavelength λ _{G} that is emitted from the display unit and passes through the second area of the stereoscopic filter and the phase correction plate is linearly polarized in a direction parallel to the one direction.

14. The stereoscopic display apparatus of one of claims 1 through 13, further comprising stereoscopic glasses that a viewer can wear, wherein one of a left-eye lens and a right-eye lens of the stereoscopic glasses allows light that is linearly polarized in the one direction to pass through the one lens, and the other one thereof allows light that is linearly polarized in a direction perpendicular to the one direction to pass through the other lens.
